# EUROPÄISCHE PATENTSCHRIFT

(11) **EP 4 011 789 B1**
(45) Veröffentlichungstag und Bekanntmachung des Hinweises auf die Patenterteilung: **20.03.2024**
(21) Anmeldenummer: 20213206.4
(22) Anmeldetag: 10.12.2020
(51) Int. Cl.: B65B 7/16, B65D 17/00, B65D 65/46, B65D 77/20

(54) **VERFAHREN ZUM HERSTELLEN EINER VERPACKUNG FÜR EINEN ARTIKEL UND VERPACKUNG**
PACKAGE AND METHOD OF MAKING A PACKAGE FOR AN ITEM
PROCÉDÉ DE FABRICATION D'UN EMBALLAGE ET EMBALLAGE POUR UN ARTICLE

(43) Veröffentlichungstag der Anmeldung: 15.06.2022
(73) Patentinhaber: Leef Blattwerk GmbH, 14467 Potsdam (DE)
(72) Erfinder: FRITZ-VIETTA, Claudio Pascal, 14467 Potsdam (DE)
(74) Vertreter: Bittner, Thomas L.

(56) Entgegenhaltungen:
- EP-A1- 1 438 914
- DE-C2- 3 927 062

## Beschreibung

Die Erfindung betrifft ein Verfahren zu Herstellen einer Verpackung für einen Artikel sowie eine Verpackung für einen Artikel.

### Hintergrund

Verpackungen werden zum Beispiel genutzt, beliebige Artikel für Verkauf und Vertrieb zu verpacken. Hierzu gehören Artikel in fester oder flüssiger Form, beispielsweise als Getränke in Getränkebechern.

Es wurde vorgeschlagen, Verpackungen oder Verpackungsbehälter aus einem pflanzlichen Behältermaterial herzustellen. Als pflanzliches Behältermaterial kommen hierbei zum Beispiel Palmblätter zum Einsatz. Beschrieben ist dieses beispielsweise in den Dokumenten DE 20 2017 006 954 U1 sowie US 10,004,345 B1. Weiterhin wurde vorgeschlagen Einweggeschirr oder Tabletts aus Palmblättern herzustellen (vgl. EP 1 438 914 A1, DE 20 2015 105 015 U1).

Auch im Dokument DE 39 27 062 C2 ist eine Verpackung aus einem Palmblatt-Material gemäß dem Oberbegriff des Anspruchs 11 offenbart. In einer Ausführungsform wird eine Verpackungsschale hergestellt, bei der zum Verpacken des Artikels dann eine Behälteröffnung mittels einer Kunststofffolie verschlossen wird. Die Kunststofffolie wird hierbei um einen umlaufenden Behälterrand herum gelegt, derart, dass die Folie sowohl auf der Ober- wie auch auf der Unterseite des Behälterrands angeordnet ist. Die so um den Behälterrand gelegte Kunststofffolie soll mittels Adhäsion anhaften. Zur Ausgestaltung des Verpackungsbehälters kann vorgesehen sein, diesen zu bedrucken. In diesem Zusammenhang ist vorgeschlagen, das Zuschnittmaterial für den Behälter vor der Pressung oder dem Zuschneiden anzuschleifen und in gewünschter Weise zu bedrucken, zum Beispiel mit einer Aufschrift. Aus optischen Gründen kann auch die untere Außenseite des Behälters glatt geschliffen sein, so dass auch auf dieser eine Beschriftung des Behälters mittels Bedrucken ermöglicht ist. Zusätzlich kann vorgesehen sein, die gesamte Außenseite des Behälters vor oder nach dem Aufbringen der Aufschrift mit einer Schutzschicht zu versehen.

### Zusammenfassung

Aufgabe der Erfindung ist es, ein Verfahren zum Herstellen einer Verpackung für einen Artikel sowie eine Verpackung für einen Artikel anzugeben, mit denen eine nachhaltige Verpackung für beliebige Artikel auf einfache und effiziente Art und Weise bereitgestellt werden kann.

Zur Lösung sind ein Verfahren zum Herstellen einer Verpackung für einen Artikel nach dem unabhängigen Anspruch 1 sowie eine Verpackung nach dem unabhängigen Anspruch 11 geschaffen. Ausgestaltungen sind Gegenstand von abhängigen Unteransprüchen.

Die Siegelverbindung zwischen der Siegelfolie und dem Behälterrand wird hierbei ausschließlich im Bereich des Siegelrands hergestellt, der zuvor mittels Anschleifen im Bereich der Deckfläche des Behälterrands hergestellt wurde. Zumindest die Unterseite des Behälterrands ist materialsparend frei von der Siegelfolie, die also nicht von der Deckfläche um den äußeren Rand des Behälterrands nach unten umgeschlagen werden muss.

Die Formulierung "haftmittelfrei" im Sinne der vorliegenden Anmeldung bedeutet, dass beim Versiegeln zusätzlich zur Siegelfolie keine Haftmittel zum Einsatz kommen. Die Siegelfolie selbst kann in einer möglichen Ausgestaltung oberflächenseitig eine Lackbeschichtung (Siegellack) aufweisen, die beim Versiegeln zumindest teilweise aufschmilzt, wodurch die Haftung der Siegelfolie am Siegelrand allein ausgebildet oder unterstützt wird.

Mit Hilfe der vorgeschlagenen Technologie ist es ermöglicht, den aus einem pflanzlichen Material hergestellten dreidimensionalen Verpackungsbehälter nach dem Einbringen des zu verpackenden Artikels zuverlässig und möglichst dicht zu verschließen, indem zwischen dem Siegelrand auf der Deckfläche des Behälterrands und der Siegelfolie eine geschlossene Siegelverbindung ausgebildet wird. Der Behälterrand wird zum Herstellen des Siegelverschlusses angeschliffen, so dass der Siegelrand bereitgestellt ist, in dessen Bereich dann die haftende (aber haftmittelfreie) Verbindung mit der Siegelfolie hergestellt wird. Zum Ausbilden des Siegelrands werden im Bereich der Deckfläche des Behälterrands mittels des Anschleifens zum Beispiel Rückstände entfernt, die sich beim zuvor ausgeführten Formen des Behältermaterials hier ablagern können und die Ausbildung der haftenden Verbindung mit der Siegelfolie behindern können. Auch kann mittels des Anschleifens die Oberflächenkontur im Bereich der Deckfläche des Behälterrands zum Herstellen des Siegelrands gezielt beeinflusst werden. Hierdurch ist es anschließend ermöglicht, ohne zusätzliches Haftmittel eine gut haftende Verbindung zwischen der Siegelfolie und dem dreidimensionalen Verpackungsbehälter im Bereich des Siegelrands auszubilden.

Als Siegelfolie kann eine Kunststofffolie verwendet werden. Es kann vorgesehen sein, dass die Siegelfolie als eine biologisch abbaubare Folie ausgeführt ist, insbesondere aus einem biologisch abbaubaren Kunststoff. Die Siegelfolie kann als Ein- oder Mehrschichtmaterial ausgebildet sein. Die Siegelfolie kann aus einem ölbasierten Kunststoff bestehen, zum Beispiel PET (Polyethylenterephthalat) oder dergleichen. Auch andere Kunststoffen können verwendet werden, zum Beispiel auf Basis eines PLA-Kunststoffs (PLA - Polylactid) oder eines PAK-Kunststoffs (PAK - Polyzyklische Aromatische Kohlenwasserstoffe).

Die Siegelfolie kann eine kompostierbare Kunststofffolie sein. Alternativ kommt eine nicht kompostierbare Kunststofffolie zum Einsatz.

Beim Verschließen der Behälteröffnung kann weiterhin Folgendes vorgesehen sein: Abstützen des Behälterrands mit dem Siegelrand auf einem Stützwerkzeug und Pressen der Siegelfolie mittels eines Presswerkzeugs gegen den Siegelrand an dem Behälterrand, wobei die Siegelfolie hierbei erwärmt wird, derart, dass die Siegelfolie zum haftenden Verbinden mit dem Siegelrand an dem Behälterrand teilweise aufschmilzt. Das Stützwerkzeug kann mit einem Siegelrahmen gebildet sein. In Ergänzung zum Stützen des Behälterrands kann der dreidimensionale Verpackungsbehälter auch in einem von dem Behälterrand umfassten mittleren Behälterbereich von dem Stützwerkzeug zumindest abschnittsweise gestützt werden, indem der dreidimensionale Verpackungsbehälter in eine mittels des Stützwerkzeugs bereitgestellten Negativform angeordnet ist. Alternativ kann der dreidimensionale Verpackungsbehälter in dem vom Behälterrand umgebenden Behälterbereich einfach freiliegend in einer Öffnung des Stützwerkzeugs angeordnet sein. Auf diese Weise kann das Stützwerkzeug in einfacher Bauweise ausgeführt sein.

Als Blattmaterial kann ein Palmblatt verwendet werden, wahlweise ein Zuschnitt des Palmblatts.

Das Blattmaterial kann beim Formen angefeuchtet, erwärmt und formgepresst werden. Nach dem Formpressen können zur Behälterausbildung Randabschnitte abgeschnitten werden.

Der Behälterrand kann beim Anschleifen zum Herstellen des Siegelrands geglättet werden, wobei oberflächenseitige Blattstrukturen des Blattmaterials abgeschliffen werden. Mittels der Glättung beim Herstellen des Siegelrands wird eine gute Haftung der Siegelfolie auf dem Siegelrand beim Verschließen der Behälteröffnung weiter unterstützt. Es kann hierbei eine durchgehend glatte Oberfläche entlang des Siegelrands hergestellt werden.

Der Siegelrand wird mittels eines einheitlichen Anschleifprozesses hergestellt, bei dem der Behälterrand in seiner Gesamtheit auf eine wahlweise ebene Schleiffläche flächig aufgelegt wird, welche den die Behälteröffnung umgebenden Behälterrand in seiner Gesamtheit gleichzeitig erfasst. Auf diese Weise wird der Siegelrand im Bereich der Deckfläche des Behälterrands in einem Zug hergestellt. Sämtliche Bereiche des Siegelrands werden gleichzeitig angeschliffen.

Beim Formen des Behältermaterials kann als dreidimensionaler Verpackungsbehälter ein Behälter aus der folgenden Gruppe hergestellt werden: Schale, Teller, Becher und Schüssel.

Die Behälteröffnung kann mittels der Siegelfolie flüssigkeitsdicht verschlossen werden. Auf diese Weise ist es ermöglicht, die Verpackung auch für flüssige (Verkaufs-)Artikel zu verwenden, beispielsweise als Trinkbecher. Auch fertige Speisen oder andere flüssige oder feste Produkte können so verpackt werden, zum Beispiel eine Flüssigseife.

Um das Blattmaterial resistenter gegen Flüssigkeiten zu machen, kann unabhängig von der Versiegelung, auch die Innenseite des Behälters beschichtet werden.

Das Blattmaterial kann auf einer Oberseite, welche dem verpackten Artikel zugewandt ist, und / oder einer gegenüberliegenden Unterseite eine Barriereschicht aufweisen, die mit einer Dünnfilmbeschichtung gebildet sein kann, um so eine Fluiddurchlässigkeit des Blattmaterials zu mindern und so die Barrierefunktion des Blattmaterials zu erhöhen. Die Dünnfilmbeschichtung kann zum Beispiel aus einem oder mehreren kompostierbaren Biokunststoffen bestehen, beispielweise PLA- und / oder PHA-Kunststoff.

Die vorangehend im Zusammenhang mit dem Verfahren zum Herstellen der Verpackung für einen Artikel erläuterten Ausgestaltungen können in Verbindung mit der Verpackung entsprechend vorgesehen sein.

Die Verpackung kann als recycelbare oder kompostierbare Verpackung vorgesehen sein.

### Beschreibung von Ausführungsbeispielen

Im Folgenden werden weitere Ausgestaltungen unter Bezugnahme auf Figuren einer Zeichnung erläutert. Hierbei zeigen:
- Fig. 1: eine schematische Darstellung eines Rohlings für einen dreidimensionalen Verpackungsbehälter im Schnitt;
- Fig. 2: eine schematische Darstellung des dreidimensionalen Verpackungsbehälters mit einem angeschliffenen Siegelrand im Schnitt;
- Fig. 3: eine schematische Darstellung des dreidimensionalen Verpackungsbehälters beim Verschließen mit einer Siegelfolie im Schnitt und
- Fig. 4: eine schematische Darstellung des dreidimensionalen Verpackungsbehälters nach dem Verschließen mit der Siegelfolie im Schnitt.

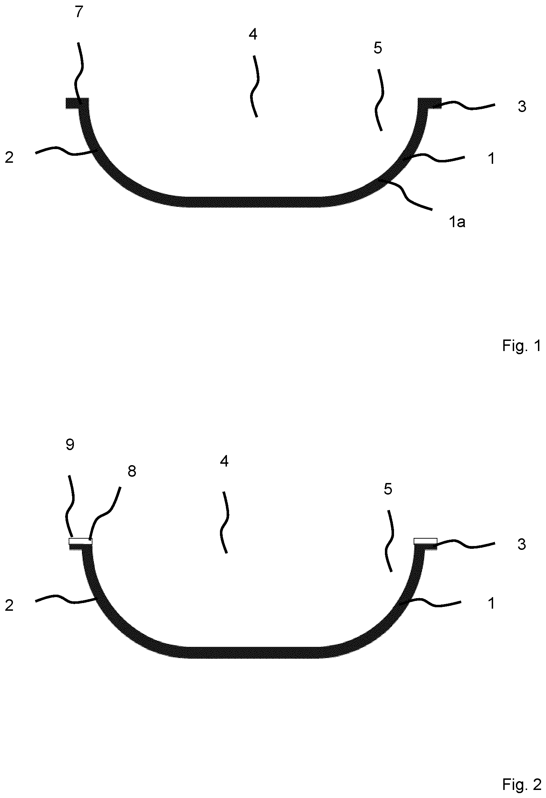

Fig. 1 bis 4 zeigen schematische Darstellungen eines dreidimensionalen Verpackungsbehälters 1 im Schnitt, bei dem eine Behälterwand 2 aus einem Palmblattmaterial besteht.

Fig. 1 zeigt eine schematische Darstellung eines Rohlings 1a für den dreidimensionalen Verpackungsbehälter 1 im Schnitt. Der Rohling 1a ist aus einem Palmblattmaterial mittels Formen in einem Formwerkzeug (nicht dargestellt) unter Anwendung von Druck und Temperatur ausgehend von einem Behältermaterial (Palmblatt) hergestellt.

Bei dem dreidimensionalen Verpackungsbehälter 1 umgibt ein Behälterrand 3 eine Behälteröffnung 4, durch welche hindurch in einem Aufnahmeraum 5 des dreidimensionalen Verpackungsbehälters 1 ein zu verpackender Artikel (nicht dargestellt) eingebracht werden kann. Hierbei kann es sich um einen festen Artikel oder einen flüssigen Artikel handeln, beispielsweise Obst oder irgendein anderes Lebensmittel, eine Suppe oder ein Getränk. Aber auch andere Produkte in flüssiger oder fester Form können so als verpackte Artikel hergestellt werden, zum Beispiel eine feste oder eine flüssige Seife, Schreibwaren oder dergleichen.

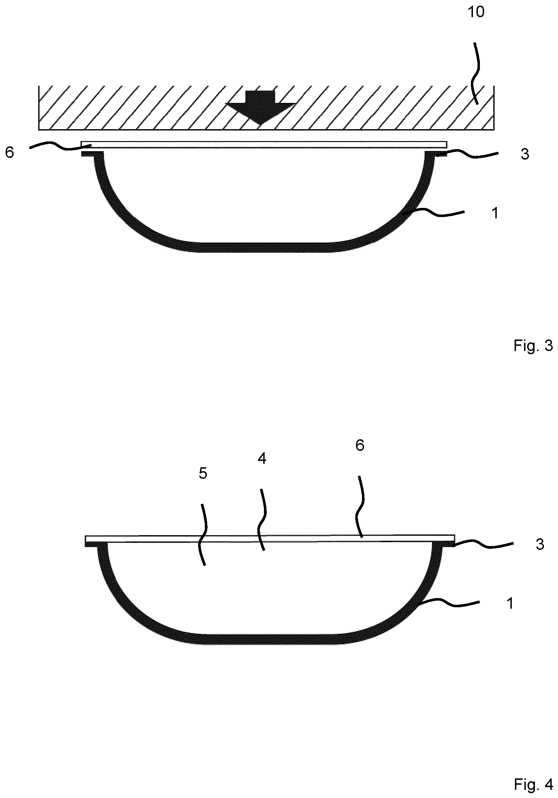

Zum Verschließen des Aufnahmeraums 5 des dreidimensionalen Verpackungsbehälters 1 ist die Nutzung einer Siegelfolie 6 vorgesehen (vgl. Fig. 3 und 4). Zur Vorbereitung des Verschließens wird der umlaufende Behälterrand 3 im Bereich einer umlaufenden Deckfläche 7 in einem Schleifprozess glättend angeschliffen, um einen schematisch gezeigten Siegelrand 8 mit geglätteter Oberfläche 9 herzustellen. Beim Schleifprozess werden Unebenheiten, die aufgrund des Natur des Palmblatts auftreten, zumindest teilweise mittels Materialabtrag abgeschliffen.

Sodann wird die Behälteröffnung 4 mittels der Siegelfolie 6 verschlossen. Hierbei stützt sich der Behälterrand 2 an einem Stützwerkzeug (nicht dargestellt) ab, welches zumindest den Behälterrand 3 stützt, wahlweise die gesamte Form des Verpackungsbehälters 1.

Die Siegelfolie 6 wird mit Hilfe eines Presswerkzeugs 10 und unter Anwendung von Temperatur gegen den Siegelrand 8 gedrückt und hierbei teilweise auf- oder angeschmolzen, insbesondere eine Oberflächenbeschichtung an der Siegelfolie 6 (beispielsweise ein Siegellack), so dass klebemittelfrei (ohne zusätzliche Klebemittel) eine haftende Verbindung (Siegelverbindung) zwischen der Siegelfolie 6 und dem Siegelrand 8 an dem Behälterrand 3 im Bereich entsteht, zumindest die geglättete Oberfläche 9 teilweise oder ganz erfassend. Auf diese Weise können beliebige Artikel effizient und sicher verpackt werden.

## Patentansprüche

1. Verfahren zum Herstellen einer Verpackung für einen Artikel, mit
- Bereitstellen eines Behältermaterials aus einem Blattmaterial einer Pflanze;
- Formen des Behältermaterials zu einem dreidimensionalen Verpackungsbehälter (1) mit einer Behälteröffnung (4) und einem die Behälteröffnung (4) umgebenden Behälterrand (3);
- Herstellen eines Siegelrands (8) auf einer Deckfläche (7) des Behälterrands (3), wobei hierbei die Deckfläche (7) des Behälterrands (3) mittels Anschleifen angeschliffen wird;
- Anordnen eines Artikels in dem dreidimensionalen Verpackungsbehälter (1) durch die Behälteröffnung (4) hindurch und
- Verschließen der Behälteröffnung (4) mittels einer Siegelfolie (6), wobei hierbei die Siegelfolie (6) mit dem Siegelrand (8) haftmittelfrei haftend verbunden wird,
**dadurch gekennzeichnet, dass** der Siegelrand (8) mittels des Anschleifprozesses nach dem Formen des Behältermaterials hergestellt wird.

2. Verfahren nach Anspruch 1, **dadurch gekennzeichnet, dass** als Siegelfolie (6) eine Kunststofffolie verwendet wird.

3. Verfahren nach Anspruch 1 oder 2, **dadurch gekennzeichnet, dass** als Siegelfolie (6) eine kompostierbare Kunststofffolie verwendet wird.

4. Verfahren nach mindestens einem der vorangehenden Ansprüche, **dadurch gekennzeichnet, dass** beim Verschließen der Behälteröffnung (4) weiterhin Folgendes vorgesehen ist:
- Abstützen des Behälterrands (3) mit dem Siegelrand (8) auf einem Stützwerkzeug und
- Pressen der Siegelfolie (6) mittels eines Presswerkzeugs (10) gegen den Siegelrand (8) an dem Behälterrand (3), wobei die Siegelfolie (6) hierbei erwärmt wird, derart, dass die Siegelfolie (6) zum haftenden Verbinden mit dem Siegelrand (8) an dem Behälterrand (3) teilweise aufschmilzt.

5. Verfahren nach mindestens einem der vorangehenden Ansprüche, dadurch **ge-kennzeichnet,** dass als Blattmaterial ein Palmblatt verwendet wird.

6. Verfahren nach mindestens einem der vorangehenden Ansprüche, dadurch **ge-kennzeichnet,** dass als Blattmaterial ein Blattmaterial mit einer Barriereschicht verwendet wird.

7. Verfahren nach mindestens einem der vorangehenden Ansprüche, **dadurch gekennzeichnet, dass** das Blattmaterial beim Formen angefeuchtet, erwärmt und formgepresst wird.

8. Verfahren nach mindestens einem der vorangehenden Ansprüche, **dadurch gekennzeichnet, dass** der Behälterrand (3) beim Anschleifen zum Herstellen des Siegelrands (8) geglättet wird, wobei oberflächenseitige Blattstrukturen des Blattmaterials abgeschliffen werden.

9. Verfahren nach mindestens einem der vorangehenden Ansprüche, dadurch **ge-kennzeichnet,** dass beim Formen des Behältermaterials als dreidimensionaler Verpackungsbehälter (1) ein Behälter aus der folgenden Gruppe hergestellt wird: Schale, Teller, Becher und Schüssel.

10. Verfahren nach mindestens einem der vorangehenden Ansprüche, dadurch **ge-kennzeichnet,** dass die Behälteröffnung (4) mittels der Siegelfolie (6) flüssigkeitsdicht verschlossen wird.

11. Verpackung für einen Artikel, mit
- einem aus einem Behältermaterial geformten dreidimensionalen Verpackungsbehälter (1) aus einem Blattmaterial einer Pflanze;
- einer Behälteröffnung (4);
- einem Behälterrand (3), der an dem dreidimensionalen Verpackungsbehälter (1) die Behälteröffnung (4) umgebend gebildet ist;
- einem Siegelrand (8), der auf einer Deckfläche (7) des Behälterrands (3) als angeschliffene Fläche gebildet ist;
- einem Artikel, der durch die Behälteröffnung (4) in dem dreidimensionalen Verpackungsbehälter (1) angeordnet ist; und
- einer Versiegelung, die mit einer Siegelfolie (6) gebildet ist, welche mit dem Siegelrand (8) haftmittelfrei haftend verbunden ist,
**dadurch gekennzeichnet, dass** der Siegelrand (8) mittels eines Anschleifprozesses nach dem Formen des Behältermaterials zu dem dreidimensionalen Verpackungsbehälter hergestellt ist.

12. Verpackung nach Anspruch 11, ausgeführt als recycelbare oder kompostierbare Verpackung.

## Claims

1. A method for producing a package for an item, comprising
- providing a container material made from a leaf material of a plant;
- moulding the container material to form a three-dimensional package container (1) having a container opening (4) and a container edge (3) which surrounds the container opening (4);
- producing a sealing edge (8) on a top surface (7) of the container edge (3), wherein here the top surface (7) of the container edge (3) is ground by means of grinding;
- arranging an item in the three-dimensional package container (1) through the container opening (4), and
- closing the container opening (4) by means of a sealing film (6), the sealing film (6) here being connected to the sealing edge (8) in an adhesive manner without an adhesive agent,
**characterized in that** the sealing edge (8) is produced by means of the grinding process after the moulding of the container material.

2. The method according to claim 1, **characterized in that** the sealing film (6) used is a plastic film.

3. The method according to claim 1 or 2, **characterized in that** the sealing film (6) used is a compostable plastic film.

4. The method according to at least one of the preceding claims, **characterized in that** during the closing of the container opening (4), the following is furthermore provided:
- supporting the container edge (3) with the sealing edge (8) on a supporting tool, and
- pressing the sealing film (6) against the sealing edge (8) at the container edge (3) by means of a pressing tool (10), wherein the sealing film (6) is heated in such a manner here that the sealing film (6) partially melts for adhesively connecting to the sealing edge (8) at the container edge (3).

5. The method according to at least one of the preceding claims, **characterized in that** the leaf material used is a palm leaf.

6. The method according to at least one of the preceding claims, **characterized in that** the leaf material used is a leaf material having a barrier layer.

7. The method according to at least one of the preceding claims, **characterized in that** the leaf material is moistened, heated and compression moulded during moulding.

8. The method according to at least one of the preceding claims, **characterized in that** the container edge (3) is smoothed during grinding to produce the sealing edge (8), wherein leaf structures on the surface of the leaf material are ground off.

9. The method according to at least one of the preceding claims, **characterized in that** during the moulding of the container material as three-dimensional package container (1), a container from the following group is produced: tray, plate, cup and bowl.

10. The method according to at least one of the preceding claims, **characterized in that** the container opening (4) is closed in a liquid-tight manner by means of the sealing film (6).

11. A package for an item, having
- a three-dimensional package container (1) made from a leaf material of a plant, which is moulded from a container material;
- a container opening (4);
- a container edge (3) which is formed on the three-dimensional package container (1) so as to surround the container opening (4);
- a sealing edge (8) which is formed on a top surface (7) of the container edge (3) as a surface which has been ground;
- an item which is arranged in the three-dimensional package container (1) through the container opening (4); and
- a seal which is formed using a sealing film (6) which is connected to the sealing edge (8) in an adhesive manner without an adhesive agent,
**characterized in that** the sealing edge (8) is produced by means of a grinding process after the moulding of the container material to form the package container.

12. The package according to claim 11, which is realized as a recyclable or compostable package.

## Revendications

1. Procédé de fabrication d'un emballage pour un article, comportant de
- fournir un matériau de récipient à partir d'un matériau de feuille d'une plante ;
- façonner le matériau de récipient en un récipient d'emballage tridimensionnel (1) avec une ouverture de récipient (4) et un bord de récipient (3) entourant l'ouverture de récipient (4) ;
- produire un bord d'étanchéité (8) sur une surface supérieure (7) du bord du récipient (3), dans lequel la surface supérieure (7) du bord du récipient (3) est poncée par meulage ;
- disposer un article dans le récipient d'emballage tridimensionnel (1) à travers l'ouverture du récipient (4) et
- fermer l'ouverture du récipient (4) à l'aide d'un film d'étanchéité (6), moyennant quoi le film d'étanchéité (6) est collé sans adhésif au bord d'étanchéité (8),
**caractérisé en ce que** le bord d'étanchéité (8) est produit au moyen d'un processus de meulage après la mise en forme du matériau du récipient.

2. Procédé selon la revendication 1, **caractérisé en ce qu'**un film plastique est utilisé comme film d'étanchéité (6).

3. Procédé selon la revendication 1 ou 2, **caractérisé en ce qu'**un film plastique compostable est utilisé comme film d'étanchéité (6).

4. Procédé selon au moins une des revendications précédentes, **caractérisé en ce que** lorsque l'ouverture (4) du récipient est fermée, il est en outre prévu ce qui suit :
- appuyer le bord du récipient (3) avec le bord d'étanchéité (8) sur un outil de support et
- presser le film d'étanchéité (6) contre le bord d'étanchéité sur le bord du récipient (3) à l'aide d'un outil de pressage (10), dans lequel le film d'étanchéité (6) est chauffé de telle sorte que le film d'étanchéité (6) fonde partiellement pour une liaison adhésive avec le bord d'étanchéité (8) sur le bord du récipient (3).

5. Procédé selon au moins une des revendications précédentes, **caractérisé en ce qu'**on utilise une feuille de palmier comme matériau de feuille.

6. Procédé selon au moins une des revendications précédentes, **caractérisé en ce qu'**un matériau de feuille doté d'une couche barrière est utilisé comme matériau de feuille.

7. Procédé selon au moins une des revendications précédentes, **caractérisé en ce que** le matériau de feuille est humidifié, chauffé et moulé lors du façonnage.

8. Procédé selon au moins une des revendications précédentes, **caractérisé en ce que** le bord du récipient (3) est lissé lors du broyage pour produire le bord d'étanchéité (8), dans lequel les structures de feuille côté surface du matériau de feuille sont meulées.

9. Procédé selon au moins une des revendications précédentes, **caractérisé en ce que** lorsque le matériau du récipient est formé comme un récipient d'emballage tridimensionnel (1), on produit un récipient du groupe suivant : bol, assiette, tasse et clé.

10. Procédé selon au moins une des revendications précédentes, **caractérisé en ce que** l'ouverture du récipient (4) est fermée de manière étanche aux liquides à l'aide du film d'étanchéité (6).

11. Emballage pour un article, comportant
- un récipient d'emballage tridimensionnel (1) formé à partir d'un matériau de récipient fabriqué à partir d'un matériau de feuille d'une plante;
- une ouverture de récipient (4) ;
- un bord de récipient (3) qui est formé autour de l'ouverture de récipient (4) sur le récipient d'emballage tridimensionnel (1) ;
- un bord d'étanchéité (8), qui est formé comme une surface meulée sur une surface de couverture (7) du bord du récipient (3) ;
- un article, qui est disposé dans le récipient d'emballage tridimensionnel (1) à travers l'ouverture du récipient (4) ; et
- un joint, qui est formé avec un film d'étanchéité (6), qui est collé sans adhésif au bord d'étanchéité (8),
**caractérisé par le fait que** le bord d'étanchéité (8) est fabriqué par un processus de meulage après avoir façonné le matériau du récipient en conteneur d'emballage tridimensionnel.

12. Emballage selon la revendication 11, conçu comme un emballage recyclable ou compostable.
